# EUROPEAN PATENT APPLICATION

(11) **EP 1 617 433 A1**
(43) Date of publication of application: **18.01.2006**
(21) Application number: 04723807.6
(22) Date of filing: 26.03.2004
(51) Int. Cl.: G11B 27/10, G11B 27/00, G11B 20/10

(54) **REPRODUCTION DEVICE AND PROGRAM**

(30) Priority: 28.03.2003 US 458360 P
(71) Applicant: MATSUSHITA ELECTRIC INDUSTRIAL CO., LTD., Kadoma-shi, Osaka 571-8501 (JP)
(72) Inventor: SHIMIZU, Yusuke, Osaka 570-0096 (JP); SHIRAKI, Kenichi, Tokyo 134-0083 (JP)
(74) Representative: Grünecker, Kinkeldey, Stockmair & Schwanhäusser Anwaltssozietät
(86) International application number: PCT/JP2004/004314
(87) International publication number: WO 2004/088665

(57) **Abstract**

The playback apparatus that plays contents recorded on the package medium 2 according to sequence information. Pieces of the sequence information are detected from a recordable medium such as a HD 3 and a memory card. A dynamic menu is generated so as to display the detected pieces of the sequence information in association with the contents recorded on the package. Then, a user specification of one of the pieces of sequence information displayed in the dynamic menu is accepted. Finally, a plurality of the contents recorded on the package are played according to the accepted piece of the sequence information.

## Description

### Technical Field

The present invention relates to playback apparatuses that play contents recorded on read-only media as package media.

### Background Art

Contents for package media are recorded after encrypted in order to prohibit copying of the contents, and then the package media are traded in the market. As a result, a user is not allowed to copy the contents freely to the user's hard disk to edit the copied contents.

As one way to enjoy the contents under such a copy restriction, the user is able to enjoy the contents recorded on the package media using a programming function provided to playbackapparatuses. The programming function allows the user to create sequence information indicating an order of the contents to be played by accepting user operations that specify the order of pieces of the contents recorded on the package media. The created sequence information is stored in a memory provided to a playback apparatus, and the contents recorded on the package media are played according to the sequence information set by the user.

With such a programming function, the user can play the contents according to a unique order set by the user, different from a prescribed order of the contents recorded on the package medium, and this would make the user feel as if the user were a disk jockey.

The sequence information that indicates the unique order set by the user is stored in the memory provided to the playback apparatus, however, and is managed separately from the package medium to which the sequence information relates. This makes it practically impossible for the user to use the sequence information after the first use, unless the user remembers which sequence information in the memory relates to which package medium. In other words, utilization of the sequence information depends upon user's memory, which is not always perfect. Thus, the sequence information is often left unused, when the user forgets over time that the user ever programmed the sequence information in the first place. With a conventional programming function, the sequence information is generated for one-off use at the time of the actual programming, and is not saved for a later use as an information resource.

### Disclosure of the Invention

An obj ect of the present invention is to provide a playback apparatus that increases opportunities for utilization of sequence information created by a user using a programming function.

The above object of the present invention can be achieved by a playback apparatus that plays contents recorded on a read-only medium, according to sequence information, the playback apparatus comprising a detecting unit operable to detect one or more pieces of the sequence information from a recordable medium; a display unit operable to generate a dynamic menu so as to display the detected pieces of the sequence information in association with the contents recorded on the read-only medium; an accepting unit operable to accept an operation by a user to specify one of the displayed pieces of the sequence information; and a playback unit operable to play a plurality of the contents recorded on the read-only medium, according to the specified piece of the sequence information.

The contents recorded on the read-only medium are displayed in a list in association with the pieces of the sequence information recorded on the recordablemediumwhich the playback apparatus is able to access, and the user is reminded of the pieces of the sequence information that have been created by the user using the programming function.

This enables the user to recognize the pieces of the sequence information recorded on the medium which the playback apparatus is able to access along with the contents recorded on the package medium. Consequently, it makes the user feel as if the user edited the whole contents on the user's own.

It is expected such a feature be highly appreciated especially by young people who express themselves through selections of songs and orders of the selected songs to be played. The playback apparatus of the present invention gives full scope to its ability when playing music clip arts of various artists, and therefore it is possible to enhance sales promotions for the music clip arts.

### Brief Description Of The Drawings

Fig. 1 illustrates a system in which a playback apparatus according to the present invention is utilized.
Fig. 2 shows examples of a sequence information file.
Fig. 3 illustrates a package medium 2.
Fig. 4 illustrates an internal structure of the playback apparatus.
Fig. 5 shows an example of a file path that constitutes a management file.
Fig. 6 shows an example of a dynamic menu.
Fig. 7 is a flowchart illustrating steps of operations performed by a start up program 8.

### Best Mode for Carrying Out the Invention

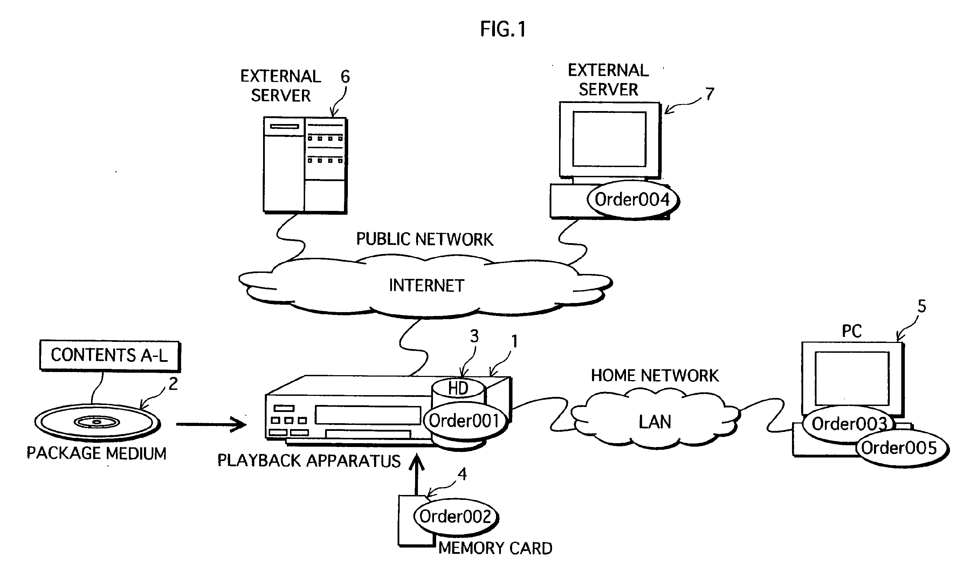

The following describes a preferred embodiment of a playback apparatus according to the present invention with reference to the drawings. Fig. 1 illustrates a system in which a playback apparatus according to the present invention is utilized. A playback apparatus 1 according to the present invention is for loading contents recorded on a package medium 2 and playing the contents, incorporates an HD 3, and is mountable with an SD memory card 4.

The playback apparatus 1 is connected to another device (personal computer 5) in a house via a home network. The playback apparatus 1 is also connected to external servers 6 and 7 via the Internet. The playback apparatus 1 is loaded with the package medium 2, and plays the contents recorded on the package medium 2. The playback by the playback apparatus 1 here includes outputting video signals to a television set via an output terminal of the playback apparatus as well as streaming distribution of video and audio to the personal computer 5 via the home network.

A characteristic of the system of the present invention lies in that the contents recorded on the package medium 2 are played based on sequence information, which indicates an order of the contents to be played by a list of content IDs. Pieces of the sequence information are respectively stored in sequence information files Order001, Order002, Order003, ... shown in the drawing. The sequence information files may be stored at various locations, such as in the HD 3 of the playback apparatus (Order001), in the SD memory card 4 mounted to the playback apparatus (Order002), in a recordable medium in the personal computer 5 connected via the home network (Order003, and 005), in a recordable medium in the external server 6, and in a recordable medium in the external server 7 (Order004).

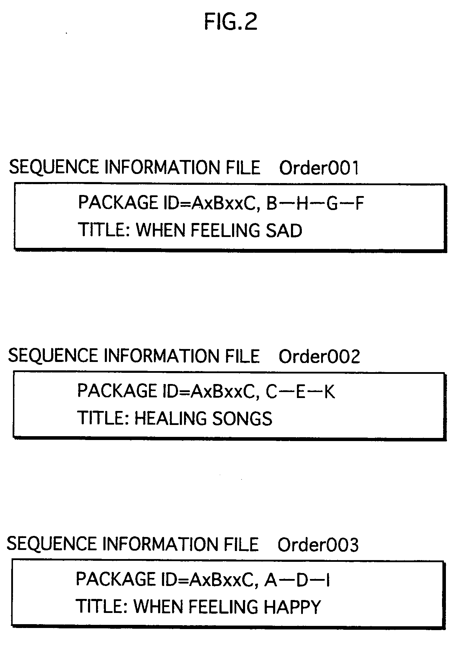

The following describes the sequence information files. Fig. 2 shows examples of a sequence information file. In each of the sequence information files Order001, 002, and 003 in the drawing, a list of content IDs (B-H-G-F, C-E-K, or A-D-I), a package ID for the package medium 2 (AxBxxC), and a name of the piece of sequence information (when feeling sad, healing songs, or when feeling happy) are corresponded to each other. The package ID is for identifying the package medium 2 in which the contents represented by the content IDs are recorded. The list of the content IDs indicates an order of the corresponding contents to be played. In other words, the list of the content IDs is a main body of a piece of the sequence information. The list is generated by accepting operations from a user determining an order for playback of the contents recorded on the package medium 2. Further, the sequence information files are managed under names such as Order*** (*** may be any three digit number) . Other than the name such as Order001 or Order002, the sequence information files may be managed under names such as a name of a piece of the sequence information attached with an extension like odr (i.e. when_feeling_sad.odr, healing_songs.odr, and when_feeling_happy.odr). When indication of being a sequence information file is expressed by the extension, it has a special advantage because the user can name and distinguish the sequence information files by preferences of the user's own.

Such pieces of the sequence information are recorded in the HD 3 equipped to the playback apparatus, in the SD memory card 4 accessible from the playback apparatus, and in the recordable medium of the playback apparatus. Using one of these pieces of the sequence information, the contents recorded on the package medium 2 are played, and this allows the user operating the playback apparatus to play the contents recorded on the package medium 2 according to a variety of different playback sequences.

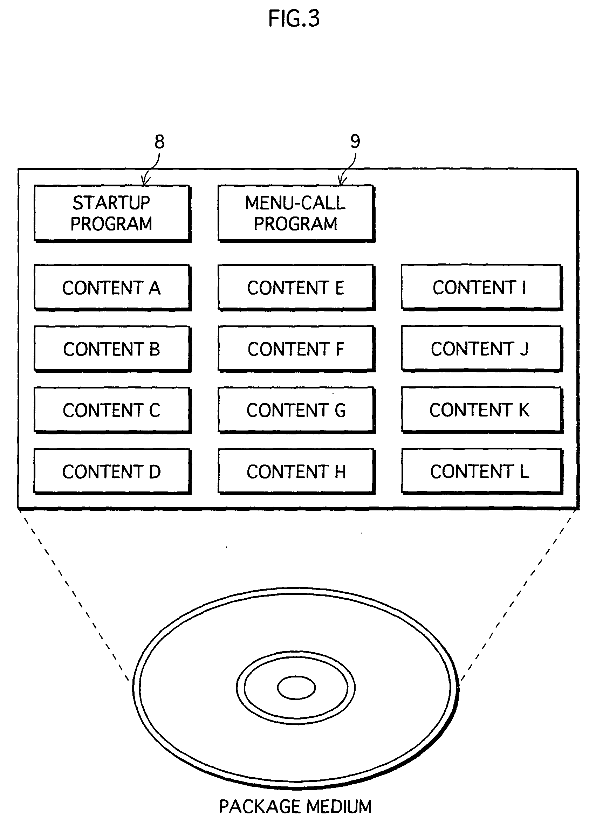

The following explains the package medium 2. Fig. 3 illustrates the package medium 2. As shown in the drawing, the package medium 2 is a BD-ROM storing a startup program 8, a menu-call program 9 in addition to a plurality of contents A-L.

The startup program 8 describes startup procedures to be performed by the playback apparatus upon loading of the package medium 2 in the playback apparatus. The startup program 8 is described in a description language that can be interpreted by a BD-ROM playback apparatus, a page-description language, or a programming language executable by virtual machines.

The menu-call program 9 manages procedures to be performed when a menu-call is requested. The menu-call is requested by the user pressing a menu button on a remote-control while the contents are played, and the menu-call program 9 describes procedures to be performed upon pressing the button. Like the startup program 8, the menu-call program 9 is also described in the description language that can be interpreted by a BD-ROM playback apparatus, the page-description language, or the programming language executable by the virtual machines.

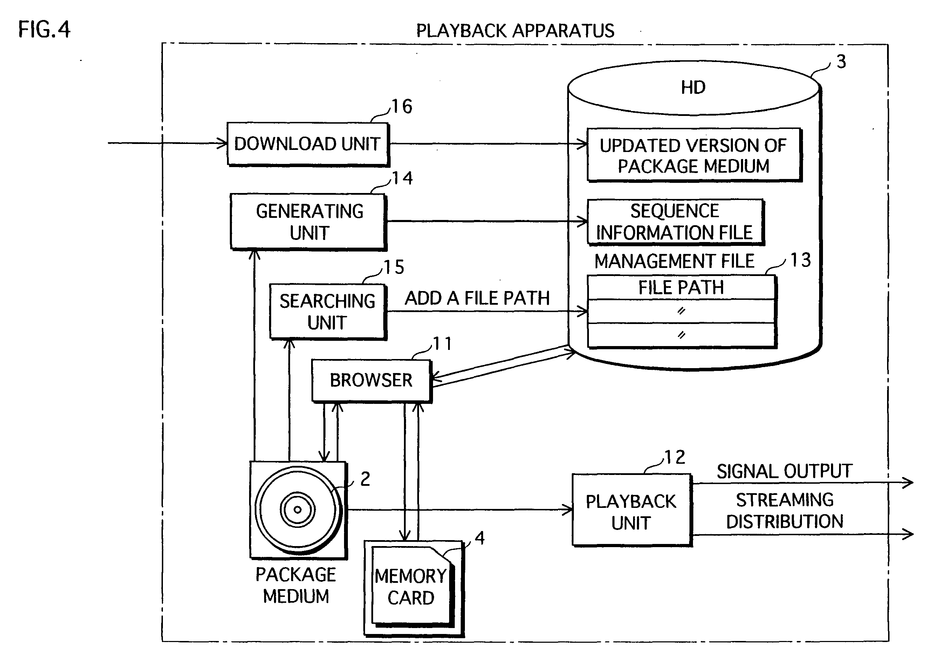

Next, the following describes an internal structure of the playback apparatus. Fig. 4 illustrates the internal structure of the playback apparatus. As shown in the drawing, the playback apparatus includes a browser 11, a playback unit 12, a management file 13, a generating unit 14, a searching unit 15, and a download unit 16.

The browser 11 displays a menu by executing the startup program 8 recorded on the package medium 2, and accepts user operations to the displayed menu.

The playback unit 12 includes a decoder for decoding encrypted digital movies and digital sounds that constitute the contents, or a descrambler for descrambling the encryption. The playback unit 12 plays the contents by signal output and streaming distribution as described above.

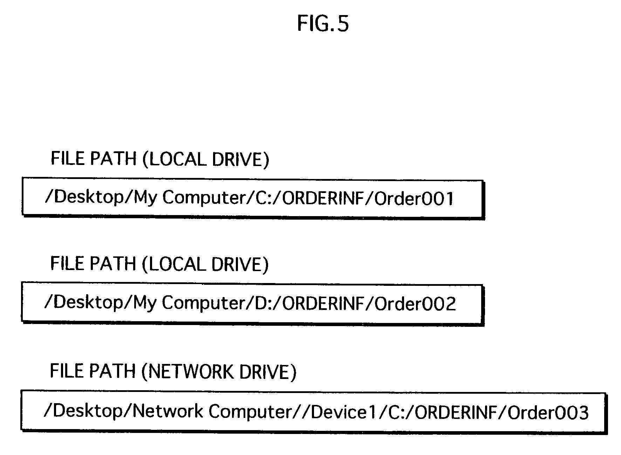

The management file 13 contains a file path to a sequence information file. The file path indicates whether the sequence information file is on a local disk or on a network disk, and which directory the sequence information file is contained. By referring to the file path, the playback unit 12 can access the sequence information file either on the local disk or on the network disk when playing the contents. Fig. 5 shows an example of a file path that constitutes a management file. In a case in which the sequence information file exists neither on the local disk nor on the network disk, the management file itself does not exist in the local disk.

The generating unit 14 generates a sequence information file by executing a so-called programming function, and then writes the generated sequence information file to the HD 3. When executing the programming function, the generating unit 14 displays a list of the contents recorded on the package medium 2, and accepts a sequence of the contents to be played specified by the user. For example, "1st: Content B", "2nd: Content H", "3rd: Content G", and "4th: Content F". After the sequence of the contents to be played is specified, a package ID is obtained from the package medium 2, and finally, the sequence information file is obtained by associating the list of the contents indicating the sequence of the contents to be played (e.g. B-H-G-F in Fig, 2), the package ID (e.g. AXBXXCX in Fig.2), and a name for a new piece of the sequence information (e.g. When feeling sad).

The searching unit 15 searches for sequence information files stored both in the local disk and network disk, and generates file paths indicating locations of the sequence information files. Because the sequence information files are named according to a certain format, the searching unit 15 performs a search using the file names in the format as keywords so as to find out the sequence information files. Then if a sequence information file is detected, a file path indicates the location of the detected sequence information file is added to the management file stored in the HD 3. If the management file is not found in the HD 3, the searching unit 15 creates a new management file, and then adds a file path for the sequence information file. The searching unit 15 also searches in the external servers 6 and 7 that have personally and/or capitally related to the producer of the package medium 2, and adds, to the management file stores the management file in the HD 3, a file path to sequence information files found on the external servers 6 and 7. By this, it is possible to play the contents recorded on the package medium 2 based on a sophisticated order of the contents set by the producer of the package medium.

The download unit 16 downloads updated versions of the programs stored in the package medium 2 from the external servers 6 and 7, and writes the downloaded programs to the HD 3. The updated versions of the startup program 8 and menu-call program 9 recorded on the package medium 2 can be obtained by this download. The playback of the contents recorded on the package medium 2 is then performed using the updated versions of the programs.

Further, the download unit 16 downloads a sequence information file from any of the external servers 6 and 7 according to the file path generated by the searching unit 15, and then writes the downloaded sequence information file to the HD 3. The sequence information file downloaded from the external servers 6 and 7 includes sequence information and profile information. The profile information indicates information about an artist relating to the contents recorded on the package medium 2, and created by a copyright owner of the contents. By downloading and writing the profile information to the HD 3, it is possible to display the latest profile of the artist.

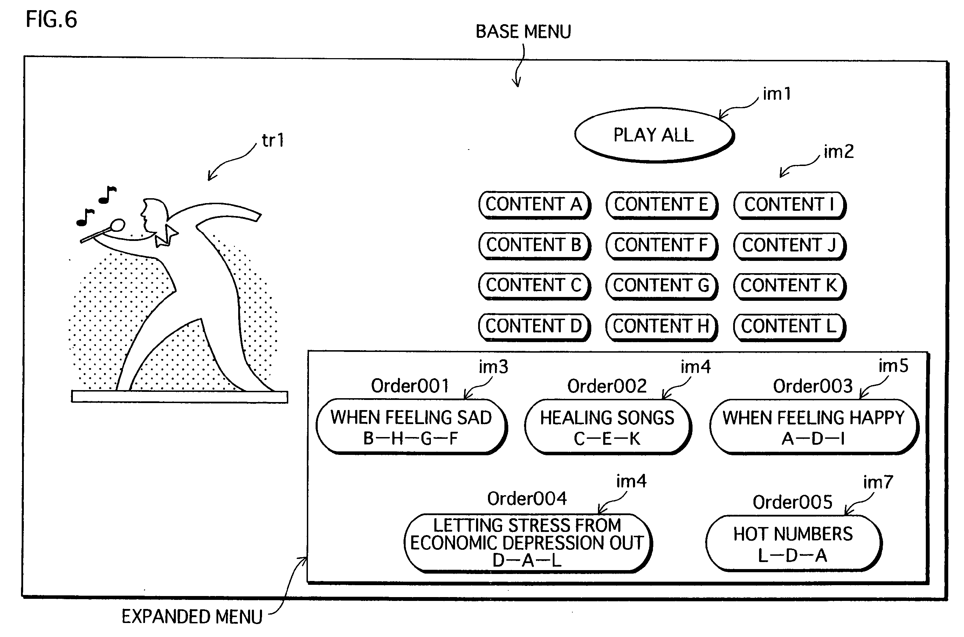

The above describes the structure of the playback apparatus according to the present invention. A characteristic of the above described playback apparatus lies in that the playback apparatus displays pieces of the sequence information recorded on the local and network disks in a menu that is generated dynamically, and prompts the user to select a piece of the sequence information. The menu generated dynamically is called a dynamic menu. When generating the dynamic menu, the playback unit 12 accesses to the sequence information files both on the local and network disks based on more than one file paths stored in the management file in the HD 3, obtains the sequence information only from the sequence information files that correspond to the package medium 2 currently loaded in the playback apparatus. Fig. 6 shows an example of a dynamic menu. As shown in the drawing, the dynamic menu includes a base menu and an expanded menu. The base menu is for displaying images for the menu recorded on the package medium 2, and includes a menu item im 1 to accept an instruction for playing all contents recorded on the package medium 2, a menu item im 2 to accept an instruction for playing an individual content recorded on the package medium 2, and an image tr 1 showing a cover image of the package medium 2. The expanded menu is generated dynamically, and includes items im 3, im 4, im 5, im 6, and im 7 representing contents recorded on the network and local disks. Further, if the profile information is recorded in the sequence information files, the profile is also displayed. These items are GUI components showing a file name, a list, and a title of each of the sequence information files.

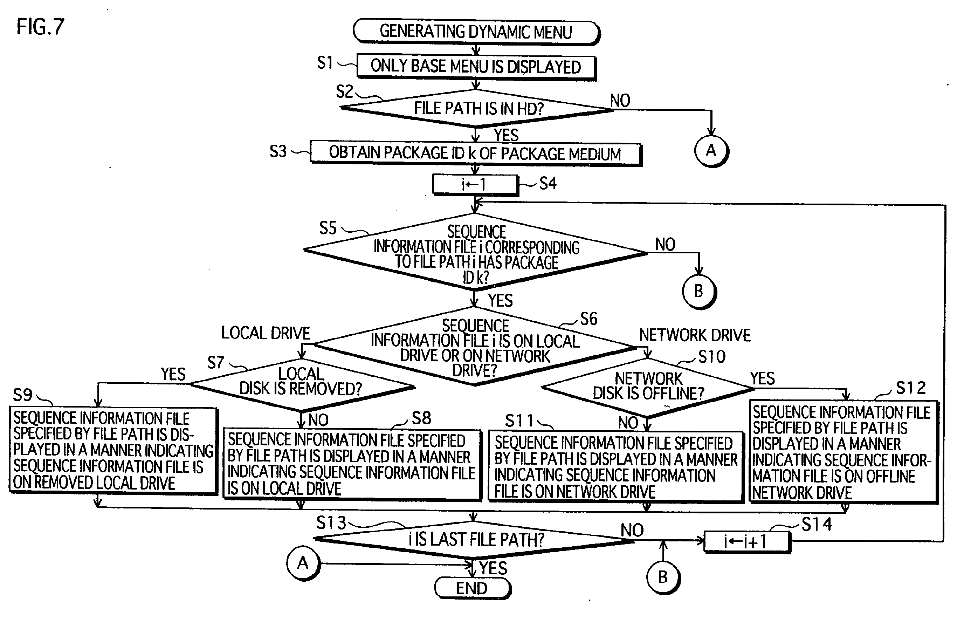

The above characteristic is realizedmainly by the startup program 8 and menu-call program 9 recorded on the package medium 2. Fig. 7 is a flowchart illustrating an order of operations performed by the start up program 8.

In Step S1, only the base menu of the dynamic menu is displayed. In Step S2, whether or not the file path exists in the recordable medium (the HD 3) is judged. If there is no file path in the recordable medium, the operation of the flowchart ends.

If the file path exists in the recordable medium, then a package ID k of the package medium 2 is obtained (Step S3). After that, the sequence information files respectively corresponding to the file paths are displayed by performing a loop operation from Step S4 to Step S14, and thus the dynamic menu with the base menu and the expanded menu is displayed. A variable i is a control variable in the loop operation.

First, in the loop operation, the variable i is initialized to "1" (Step S4). Then, whether or not a sequence information file i corresponding to a file path i has the package ID k is judged (Step S5). If a sequence information file i does not have the package ID k, the operation moves to Step S14, and the variable i is incremented.

If the sequence information file i has the package ID k, then whether the sequence information file i is on the local disk or on the network disk is judged (Step S6).

If the sequence information file i is on the local disk, then whether or not the local drive is removed is judged (Step S7). If the local drive is not removed, then the sequence information file specified by the file path is displayed in a manner that indicates the sequence information file is on the local drive (Step S8).

If the local drive is removed, then the sequence information file specified by the file path is displayed in a manner that indicates the sequence information file is on the local drive that has been removed (Step S9). The manner that indicates the sequence information file is on the local drive that has been removed means that an icon for the file is shown by dark colors of low brightness and saturation.

If the sequence information file i is on the network disk, then whether or not the network drive is offline is judged (Step S10). If the network drive is not offline, then the sequence information file specified by the file path is displayed in a manner that indicates the sequence information file is on the network drive (Step S11). The manner that indicates the sequence information file is on the network drive means that an icon for the file is shown by different colors from the icons for the files on the local drive.

If the network drive is offline, then the sequence information file specified by the file path is displayed in a manner that indicates the sequence information file is on the network drive that has been offline (Step S12). The manner that indicates the sequence information file is on the network drive that has been offline means that an icon for the file is shown by dark colors of low brightness and saturation and of the same hues as the icon for the files on the network drive.

When an item corresponding to the sequence information file is displayed, whether or not the "i" is a last file path is judged (Step S13). If "i" is not the last file path, then the variable i is incremented (Step S14), and the operation returns to Step S5.

If "i" is the last file path, then the operation of the flowchart ends. The above described steps are the procedures performed upon starting-up. The procedures performed upon request for the menu-call are the same as the procedures upon starting-up, and therefore, not explained here.

As described above, in the present embodiment, the playback apparatus generates the dynamic menu upon loading of the package medium 2 or upon request for the menu-call by the user. This makes the user recognize the sequence information files as if the files were recorded on the package medium 2, even though the sequence information files are recorded at various locations in reality, and allows the user to play the contents recorded on the package medium 2 utilizing the sequence information files.

Further, if the startup program 8 is described in the page-description language, other apparatuses on the home network can access the startup program 8 by setting the local disk in which the package medium 2 is loaded as a shared drive. By having the playback unit 12 perform streaming distribution according to an access to the dynamic menu from an apparatus, an owner of the playback apparatus can make family members and friends watch and/or listen to the contents recorded on the package medium 2 utilizing sequence information created by the owner. By this, the user can enjoy the contents feeling as if he were a disk jockey.

### [Supplement]

The above description does not cover each and all embodiments of the present invention. The present invention may also be put into practice in a form of modified examples A, B, C, D, and E as described below. Each invention related to each claim of the present application is described as an expansion and/or generalization of the above described embodiment and modified examples. An extent of the expansion and generalization is based on characteristics of technical standards in the related technical field at the time of the application.
(A) In a case in which the drive unit is an autochanger and more than one read-only medium is loaded on a plurality of trays, it is possible to represent the sequence of the contents to be played using tray numbers and package IDs.
(B) The read-only medium is described as a BD-ROM in the above embodiment and modified examples. However, characteristics of the present invention do not depend upon physical properties of BD-ROMs. Examples of the read-only medium include DVD-ROMs and CD-ROMs.
   Further, examples of the recordable medium include optical discs such as DVD-RAMs, DVD-RWs, DVD-Rs, DVD+RWs, DVD+Rs, CD-Rs, and CD-RWs, as well as magnetic optical discs such as PDs and MOs. The recordable medium also may be (i) a semiconductor memory card such as a compact flash card, a smart media, a memory stick, a multi-media card, and a PCM-CIA card, (ii) a magnetic disc such as a flexible disc, a SuperDisk, a Zip, and a Clik!, and (iii) a removable hard disk drive such as an ORB, a Jaz, a SparQ, a SyJet, an EZFley, and a micro drive.
(C) The present invention may also be achieved by such a playback apparatus that only includes a BD-ROM drive and a television set that includes the rest of the components. In this case, the playback apparatus and the television set can be connected to the home network via IEEE 1934. Further, although the playback apparatus according to the present embodiment is used by connecting to the television set, the playback apparatus may be incorporated into a television set. Moreover, it is also possible to implement only a system LSI that is an essential part of the procedures performed with the playback apparatus according to the above embodiment and modified examples. Because all of the above playback apparatuses are the embodiments of the invention described in the present specification, manufacturing playback apparatuses based on the internal structure of the playback apparatuses according to the embodiments, regardless of the manner in which the present invention is put into practice, is construed as practical implementation of the present invention disclosed in the present specification. The practical implementation includes transferring the playback apparatus according to the embodiments regardless of whether or not compensation is received (sales when compensation is received, and gift when no compensation is received), as well as lending or importing the playback apparatus. Also, acts of offering to transfer or lend the program to general users by way of storefront display, catalog invitation, distribution of brochure, and such are also considered to be practical implementation of the playback apparatus.
(D) Information processing executed by a program shown in the flowchart in Fig.7 is realized using hardware resources, and accordingly, the program alone, whose processing is shown in the flowchart, is established as an invention. Although all of the above embodiment and modified examples describe the program according to the present invention as a program that is built-in in the playback apparatus, the program according to the embodiment alone may be implemented without the playback apparatus. Examples of the implementation of the program include (i) producing the program, (ii) transferring the program as a gift or profit, (iii) lending the program, (iv) importing the program, (v) providing the program to general public via an interactive electronic communications line, and (vi) offering common users to transfer or lend the program by way of storefront display and distribution of brochure.
(E) An element of "time" in the steps in the flowchart performed in a sequential order is considered to be essential. This makes it clear that the process in the flowchart describes the practical uses of a playback method. Performing the procedures shown in the flowchart by carrying out the operation in each step sequentially to obtain the obj ect and effects of the present invention is considered to be the implementation of the playback method according to the present invention.

Although it is possible to make the above described modification to the practical uses of the present invention, each invention relating to each claim reflects means to solve a technical problem of the conventional technologies, and therefore, a technical scope of each invention relating to each claim of the present invention does not exceed the technical scope perceived as pertinent to means to solve a technical problem of the conventional technologies by the person skilled in the art. Thus, each invention relating to each claim of the present invention substantially corresponds to the detailed description of the present invention.

### Industrial Applicability

The playback apparatus according to the present invention is capable of, by generating the dynamic menu, playing the contents according to the sequence information recorded on the recordable medium. This would increase a value added to the package medium 2, and activate a consumer products market. Thus, the playback apparatus according to the present invention has a high industrial applicability in the field of the consumer products industry.

## Claims

1. A playback apparatus that plays contents recorded on a read-only medium, according to sequence information, the playback apparatus comprising:
a detecting unit operable to detect one or more pieces of the sequence information from a recordable medium;
a display unit operable to generate a dynamic menu so as to display the detected pieces of the sequence information in association with the contents recorded on the read-only medium;
an accepting unit operable to accept an operation by a user to specify one of the displayed pieces of the sequence information; and
a playback unit operable to play a plurality of the contents recorded on the read-only medium, according to the specified piece of the sequence information.

2. A playback apparatus according to Claim 1, wherein
the recordable medium stores a plurality of pieces of the sequence information in correspondence with package IDs, and
the displayed pieces of the sequence information correspond to a package ID assigned to the read-only medium.

3. A playback apparatus according to Claim 1, wherein
the recordable medium is connected to the playback apparatus either locally or via a network, and
the display unit displays the pieces of the sequence information in a different manner depending on whether the connection is local or via the network.

4. A playback apparatus according to Claim 3, wherein
the display unit displays the pieces of the sequence information in a distinctive manner, if the recordable medium is offline.

5. A playback apparatus according to Claim 3, wherein
the recordable medium is removable, and
the display unit displays the pieces of the sequence information in a distinctive manner, if the recordable medium is removed.

6. A playback apparatus according to Claim 1, wherein
the read-only medium is one of a plurality of read-only media, and
the sequence information indicates a playback sequence of the contents that are separately recorded on the plurality of read-only media.

7. A playback apparatus according to Claim 1, wherein
the dynamic menu is generated when the read-only medium is loaded in the playback apparatus, or when the user requests a menu-call.

8. A playback apparatus according to Claim 7, wherein
the read-only medium stores a program indicating one of procedures performed upon loading of the read-only medium, and procedures performed upon request for the menu-call,
the playback apparatus further includes a download unit operable to download a latest version of the program from a server on a network, and
the dynamic menu is generated based on one of the program recorded on the read-only medium, and the latest version of the program that has been downloaded.

9. A playback apparatus according to Claim 1, further comprising:
a download unit operable to download a piece of the sequence information, along with profile information, from a server on a network, wherein
the display unit displays, in the dynamic menu, the piece of the sequence information and profile information that have been downloaded.

10. A program for having a computer execute procedures for playing contents recorded on a read-only medium, according to sequence information, the procedures comprising steps of:
detecting one or more pieces of the sequence information from a recordable medium;
generating a dynamic menu so as to display the detected pieces of the sequence information in association with the contents recorded on the read-only medium;
accepting an operation by a user to specify one of the displayed pieces of the sequence information; and
playing a plurality of the contents recorded on the read-only medium, according to the specified piece of the sequence information.
